# EUROPEAN PATENT SPECIFICATION

(11) **EP 0 467 143 B1**
(45) Date of publication and mention of the grant of the patent: **01.05.1996**
(21) Application number: 91110931.2
(22) Date of filing: 02.07.1991
(51) Int. Cl.: G11B 15/67

(54) **A tape threading apparatus used in a tape unit**
Bandeinfädelvorrichtung für Bandeinheit
Dispositif d'enfilage de bande pour unité à bande

(30) Priority: 18.07.1990 JP 191017/90
(43) Date of publication of application: 22.01.1992
(73) Proprietor: FUJITSU LIMITED, Kawasaki-shi, Kanagawa 211 (JP)
(72) Inventor: Ohshita, Masaru, c/o Fujitsu Limited Pat. Dep., Kawasaki-shi, Kanagawa 211 (JP)
(74) Representative: Stebbing, Timothy Charles

(56) References cited:
- EP-A- 0 074 476
- EP-A- 0 221 762
- EP-A- 0 238 251
- EP-A- 0 238 260
- EP-A- 0 367 593
- IBM TECHNICAL DISCLOSURE BULLETIN. vol. 32, no. 9B, February 1990, NEW YORK US page 282 'Tape threader for a leader block carried in a tape cartridge'

## Description

The present invention relates to a tape unit which takes a tape cartridge (e.g. a cartridge having a single reel of magnetic tape, hereinafter simply called a cartridge) used, for example, in a file store of a computer system, or more particularly to an apparatus for threading (including unthreading) tape of a cartridge in a tape unit.

When a write or read operation is to be performed on a magnetic tape of a cartridge, the cartridge is first loaded into a magnetic tape unit, then the magnetic tape is threaded through the threading path and wound on a machine reel of the magnetic tape unit to establish a running path of the magnetic tape.

With the ever-increasing demand for small-sized computer systems, demand for a small-sized magnetic tape unit is also increasing.

It is an absolute necessity for attaining high reliability of magnetic tape unit to correctly carry out threading and unthreading of the magnetic tape.

Therefore, there is a demand for a threading apparatus which allows a small-sized magnetic tape unit to be realized and which carries out tape threading and unthreading securely.

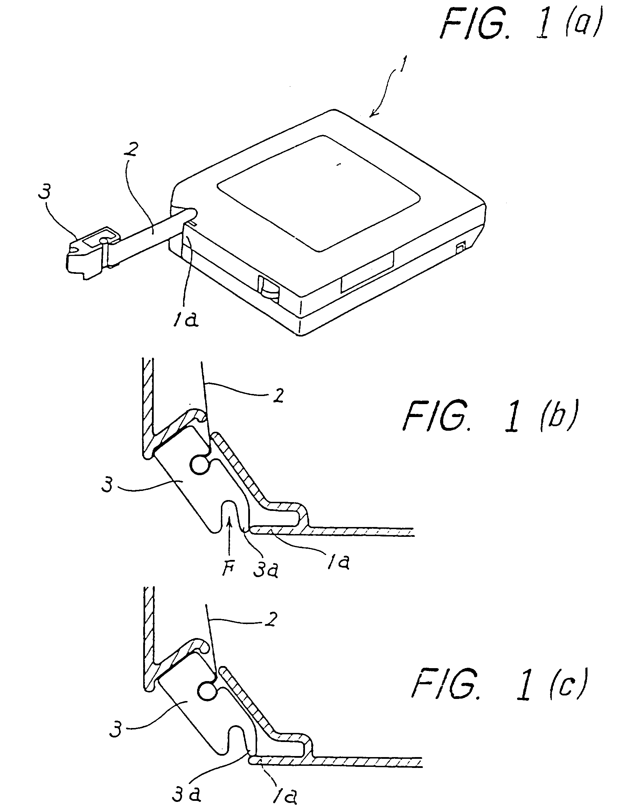

The drawbacks of an existing cartridge will now be explained with reference to Fig. 1. Fig. 1(a) is a perspective view of the cartridge; Fig. 1(b) is a sectional view of the cartridge showing a leader block ready to be inserted therein; and Fig. 1(c) is a sectional view with the leader block inserted.

The cartridge 1 has a reel with magnetic tape 2 wound thereon. The end of the magnetic tape 2 is connected to a leader block 3 used for pulling the magnetic tape 2 out of the cartridge 1. The leader block 3 is usually in the inserted state, in which it is latched in the cartridge 1.

When the leader block 3 is pushed into the cartridge opening in the state shown in Fig. 1(b), the tongue 3a of the leader block 3 rides over the cartridge tongue 1a which is molded in synthetic resin, and becomes latched thereon as shown in Fig. 1(c).

The cartridge tongue 1a is resilient and produces an opposing spring force when the leader block 3 is pushed into or pulled out of the cartridge 1, so a certain force is needed to insert the leader block. For instance, the ANS Standard stipulates that the insertion force F required to push the leader block into its latched position in the cartridge should not exceed 1.23 kg.

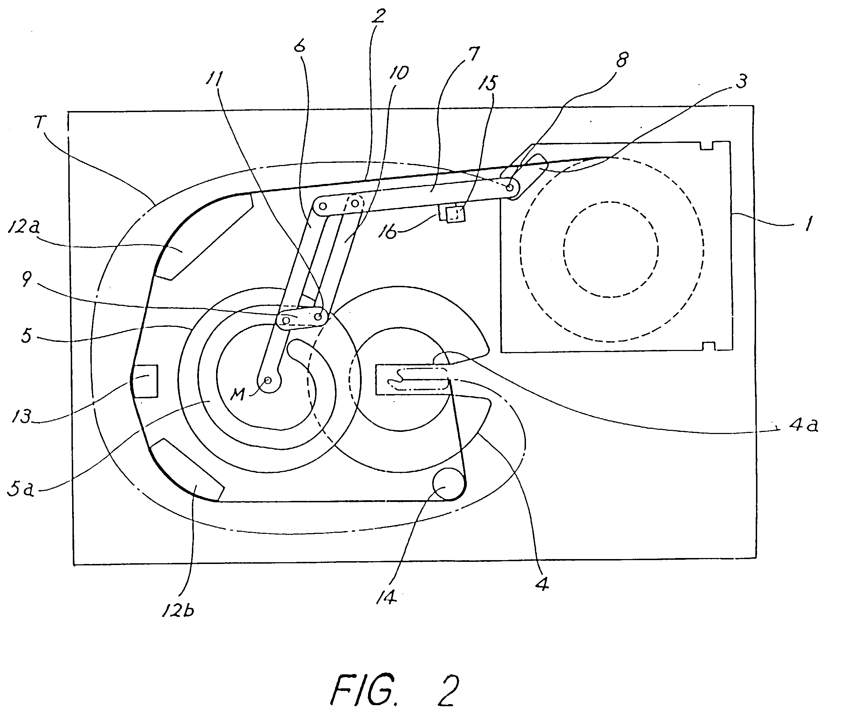

Fig. 2 is a schematic diagram showing a previously-proposed magnetic tape threading mechanism. In the Figure, the chain line T shows the path along which a magnetic tape is threaded and M shows a threading motor.

When the cartridge 1 is loaded on a magnetic tape unit, the magnetic tape 2 is pulled out of the reel of the cartridge 1 and led to the machine reel 4 after being threaded through a tape guide 12a, a magnetic head 13, a tape guide 12b and a tension roller 14.

Threading of the magnetic tape 2 is carried out by a panto-arm consisting of the first arm 6, second arm 7, third arm 9 and fourth arm 10. As the panto-arm swings, a pin 8 provided at an end of the panto-arm pulls out the leader block 3 which is provided at the end of the magnetic tape 2, and a guide pin 11 of the panto-arm moves along the guide groove 5a to the machine reel 4 to engage the leader block 3 with the leader block groove 4a of the machine reel 4.

For unthreading the magnetic tape 2, the above sequence is reversed and, when a flag 16 attached to the second arm 7 comes in front of a photosensor 15, the photosensor 15 detects that the leader block 3 is inserted and causes the panto-arm to stop swinging.

Accordingly, the conventional threading mechanism has the following problems:-
(1) In a threading mechanism using a panto-arm, the magnetic tape has to travel over a wide ranging tape path, which makes the magnetic tape unit large in size.
(2) A large insertion force F is required to insert the leader block 3 into the cartridge 1. To get an insertion force F large enough, the panto-arm has to be swung at a high rotational speed at the moment when the leader block 3 is inserted into the cartridge 1. The leader block insertion may fail however, in which case the panto-arm rebounds due to a spring return force acting on the leader block 3.
(3) The leader block insertion may fail due to a dimensional error of cartridge 1 or positioning error of the cartridge 1 loaded into the magnetic tape unit.
(4) Even when the leader block insertion fails, the above-mentioned photosensor 15 may falsely detect the flag 16 and cannot judge correctly whether or not the leader block 3 is really inserted in the cartridge 1. As a result, the magnetic tape unit is caused to malfunction and the computer system to be halted.

The following are representative of the prior art in the area of threading apparatus:- Japanese Laid Open Patents, Provisional Publication Nos. 62-257657, 62-119765, 60-10446 and 63-10360.

EP-A-0 367 593 discloses a tape threading apparatus in accordance with the preamble of accompanying claim 1. In this apparatus, the threading arm consists of upper and lower arms. The upper arm serves as the primary means for transferring the leader block from the cartridge to the machine reel. The lower arm is used to impart a lever action to assist in withdrawal of the leader block from, and its insertion into, the cartridge. An elastic means in the form of a spring provides the force necessary to unseat the leader block from the machine reel.

IBM Technical Disclosure Bulletin, Vol.32, No.9B, February 1990, page 282, discloses a tape threading apparatus in which the threading arm consists of a main arm and a sub arm pivotally connected to each other, with a tension spring joining the middle of both arms so that the spring opens and closes the arms. The spring presses the sub arm to a guide groove in order to move the threading arm along the guide groove.

The assembly of main arm and sub-arm can be a linear-telescoping type as well.

EP-A-0 221 762 discloses a similar tape threading apparatus in which the threading arm consists of a leading arm and a trailing arm which is pivotally connected to the leading arm by a pivot pin and moves along a guide rail. A torsion spring, which is wrapped around the pivot pin, presses the trailing arm so that the trailing arm moves along the guide rail.

According to the present invention, there is provided a tape threading apparatus suitable for use in a tape unit including a machine reel for performing a threading operation to pull out from a cartridge a leader block attached at an end of a tape, thread and unthread the tape and insert the leader block back into the cartridge, said tape threading apparatus comprising:-
a threading arm for carrying the leader block, said threading arm having a first end connected to a rotational axis and a second end provided with engaging means for the leader block, said threading arm including a linkage of a plurality of arms rotatably coupled to one another and including elastic means; and
guidance means for guiding the engaging means so that the engaging means carries the leader block between the cartridge and the machine reel;
characterised in that:
said threading arm further comprises an additional member linked to one of said arms via said elastic means, whereby said elastic means allows said threading arm to expand and contract lengthwise when inserting the leader block into the cartridge in such a way that a shock caused to the threading arm is absorbed and a required insertion force for the leader block is provided.

An embodiment of the present invention may provide a mechanism for securely locking the threading arm where the leader block is to be latched in the cartridge.

An embodiment of the present invention may provide a mechanism for judging correctly whether or not the leader block is properly inserted in the cartridge.

An embodiment of the present invention may provide a small-sized threading mechanism.

An embodiment of the present invention may also provide a small-sized and highly reliable tape unit for information-storing tape such as magnetic tape.

Reference is made, by way of example, to the accompanying drawings in which:-
Fig. 1 is a diagram illustrating an outline of a cartridge;
Fig. 2 is a schematic diagram showing a magnetic tape threading mechanism;
Fig. 3 is a schematic diagram showing a magnetic tape threading mechanism of the first embodiment of the present invention;
Fig. 4 indicates the forces acting on a linkage;
Fig. 5 shows a threading operation performed by the first embodiment of the present invention;
Fig. 6 is a schematic diagram showing a magnetic tape threading mechanism of the second embodiment of the present invention;
Fig. 7 shows a detailed construction of the threading arm of the second embodiment of the present invention; and
Fig. 8 shows a threading operation performed by the second embodiment of the present invention.

Throughout the drawings, identical reference numerals are used to designate the same or similar components.

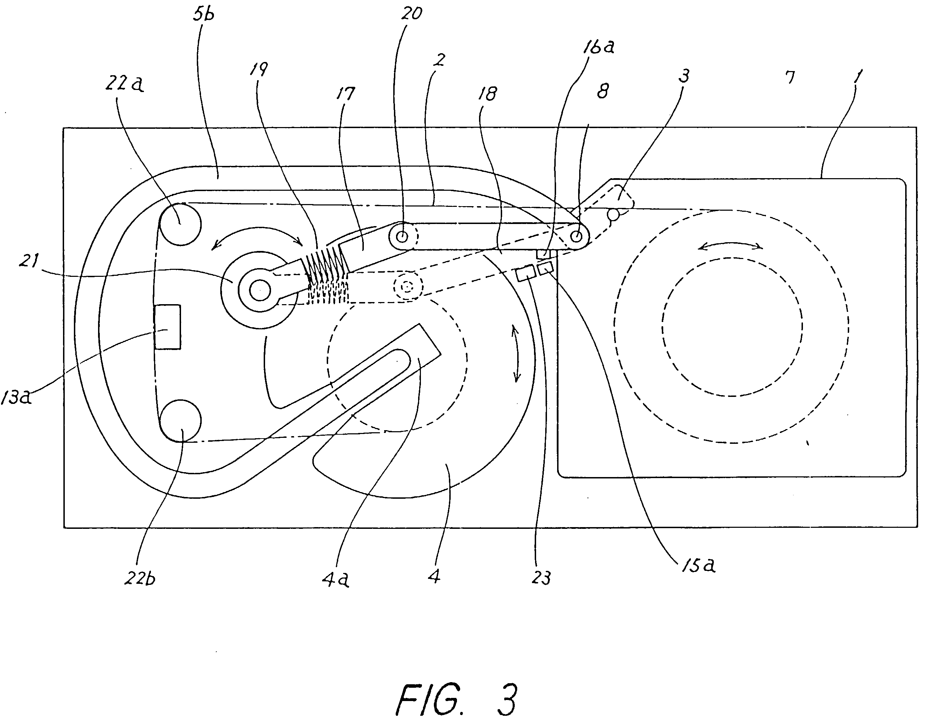

Referring to Fig. 3, in a first embodiment of the invention, a linkage consisting of two arms 17 and 18 pulls the leader block 3 out of the cartridge 1 and threads the magnetic tape. The arm 17 is connected to a threading motor 21 which swings the linkage and the arm 18 is provided with a pin 8 for pulling out the leader block 3.

At least one of the arms 17 and 18 is provided with an elastic member 19 which expands and contracts lengthwise along the threading arm consisting of the arms 17 and 18. The total length of arms 17 and 18 is set longer than the distance between the rotational axis of the threading arm and the leader-block pick-up position where the leader block 3 is latched in the cartridge 1.

A guide groove 5b for guiding the pin 8 is provided along the threading path between the leader-block pick-up position and the leader block engaging groove 4a of machine reel 4.

How the threading mechanism performs leader-block insertion is explained below.

The threading arm consisting of arms 17 and 18 swings and carries the leader block 3 into the cartridge opening. The arms 17 and 18, which are doglegged at this point, straighten by compressing the elastic member 19, become reversely doglegged again and finally stop at the position where the arm 18 strikes against a stopper 23.

A sensor 15a for detecting the threading arm is provided slightly before the position where the arm 18 comes into contact with the stopper 23. The sensor 15a causes the threading motor 21 to stop on detecting the arm 18.

How the threading mechanism threads and unthreads the magnetic tape 2 will now be explained with reference to Fig. 3.

When threading the magnetic tape 2, the threading motor 21 rotates counterclockwise to make the arm 17 pull the arm 18 by means of node (joint) 20. The pin 8 provided at the end of the arm 18 pulls the leader block 3 out of the cartridge 1, travels along the guide groove 5b while pulling the leader block 3 and engages the leader block 3 with the leader block engaging groove 4a of the machine reel 4.

When unthreading the magnetic tape 2, the threading motor 21 rotates clockwise. The pin 8 travels back along the guide groove 5b while pulling the leader block 3 to insert the leader block 3 into the cartridge 1. During insertion, the leader block 3 has to be pushed against the opposing force of the tongue provided in the cartridge 1, causing a shock to both cartridge 1 and the threading arm.

The elastic member 19 provided on at least one of the arms 17 and 18, provided in the present invention, can expand and contract lengthwise along the threading arm, thereby absorbing the shock and preventing the threading arm from rebounding.

Two aspects of the insertion process are explained in more detail as follows.
(1) Leader-block Insertion Force by the Threading Arm
   The threading mechanism of the present invention can absorb the shock which hinders the leader block 3 from being inserted into the cartridge 1 and, thus, can effectively insert the leader block 3 with only a small torque.

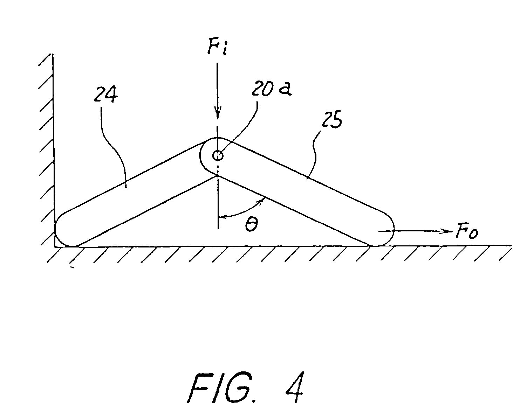

   Fig. 4 illustrates the forces acting on a linkage. When a linkage consisting of arms 24 and 25, which are rotatably coupled at each end by a node 20a, is doglegged and placed on the floor with the other end of the arm 24 pressed against a wall, a vertical force Fi applied on the node 20a causes a horizontal force Fo to act on the other end of the arm 25. The force Fo is expressed as:-$\text{Fo = Fi sin θ/2 cos θ}$ where it is assumed that the arms are equal in length and neglecting frictional force exerted on the other end of the arm 25 by the floor surface.
   Therefore, the closer the angle θ is to π/2 (radian), the larger the force Fo which can be obtained with a given force Fi. The force Fo corresponds to the leader-block insertion force generated by the linkage in the present embodiment.
(2) Self-lock Function
   The threading mechanism can also be given a self-lock function by means of the stopper 23 and, thus, insert the leader block 3 securely.

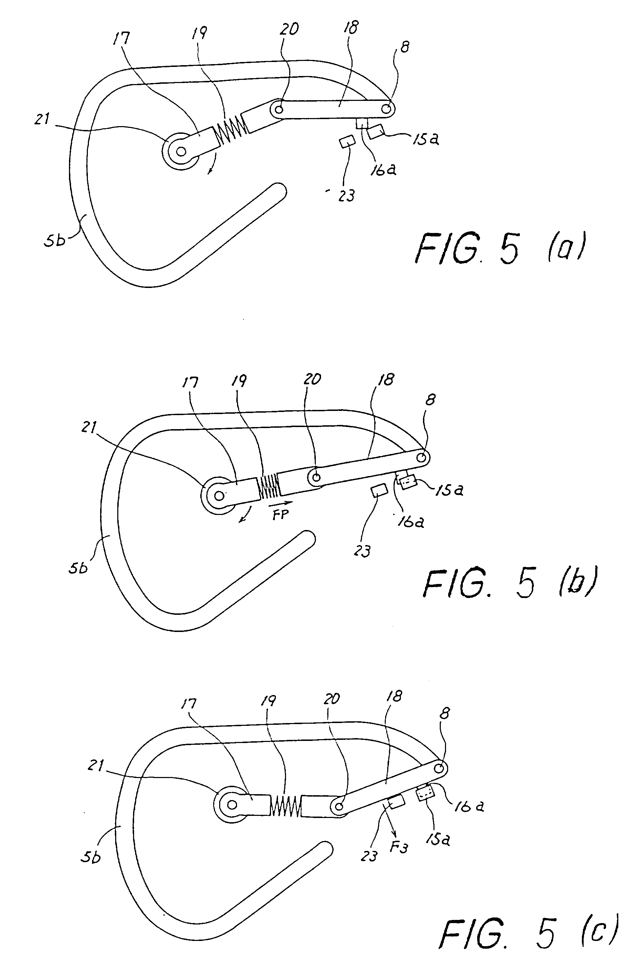

   Fig. 5 shows the threading operation performed by the first embodiment of the present invention. Figs. 5(a) to (c) illustrate sequential stages in this operation, particularly leader-block insertion, as follows:-
   (a) Leader-block Insertion Starting Stage
      The threading motor 21 rotates clockwise to make the pin 8 carry the leader block to the cartridge opening. The arms 17 and 18 are doglegged at this point, since the total length of the arms is set longer than the distance between the leader-block pick-up position and the rotational axis of the arm 17.
   (b) Leader-block Inserting Stage
      The threading motor 21 rotates clockwise further and the doglegged arms 17 and 18 straighten while compressing the elastic member 19.
      The threading arm consisting of arms 17 and 18 pushes the leader block 3 into the cartridge 1 with a force Fp equal to the force compressing the elastic member 19. That is, the leader-block insertion force depends on the elasticity of the elastic member 19. Therefore, the elastic member 19 should be designed so that the force Fp provides a desired leader-block insertion force. The torque given to the arm by the motor 21 can be small in comparison with the force Fp and, therefore, a small-sized motor having a low torque can be used as the threading motor.
   (c) Arm Self-locking Stage
      As the threading motor 21 rotates clockwise still further, the arms 17 and 18 become reversely doglegged after passing through the straightened state of Fig. 5(b), and stop swinging when arm 18 strikes the stopper 23.
      When the arms 17 and 18 become slightly doglegged immediately after passing the above-mentioned straightened state, the arms 17 and 18 and threading motor 21 receive a clockwise torque due to the spring force of the elastic member 19.
      Thus, a force Fs which presses the arm 18 against the stopper 23 can be obtained without supplying a torque from the threading motor 21 and, therefore, the threading mechanism can maintain a stable self-locking state.

Therefore, by providing a sensor 15a at a position slightly before the position where the threading arm contacts the stopper 23, and by stopping the motor 21 in response to this sensor, the threading mechanism can be held in position even if motor 21 is switched off.

When the threading mechanism enters the self-locking state after the threading motor 21 stops, the leader block 3 is pushed into the cartridge 1 by the force Fp of the elastic member 19.

Accordingly, when the sensor 15a continues to detect the threading arm, it can be judged that the leader block 3 has been correctly inserted into the cartridge 1.

For example, the sensor 15a shown in Fig. 5 detects the presence of the threading arm by detecting a flag 16a provided on the arm 18.

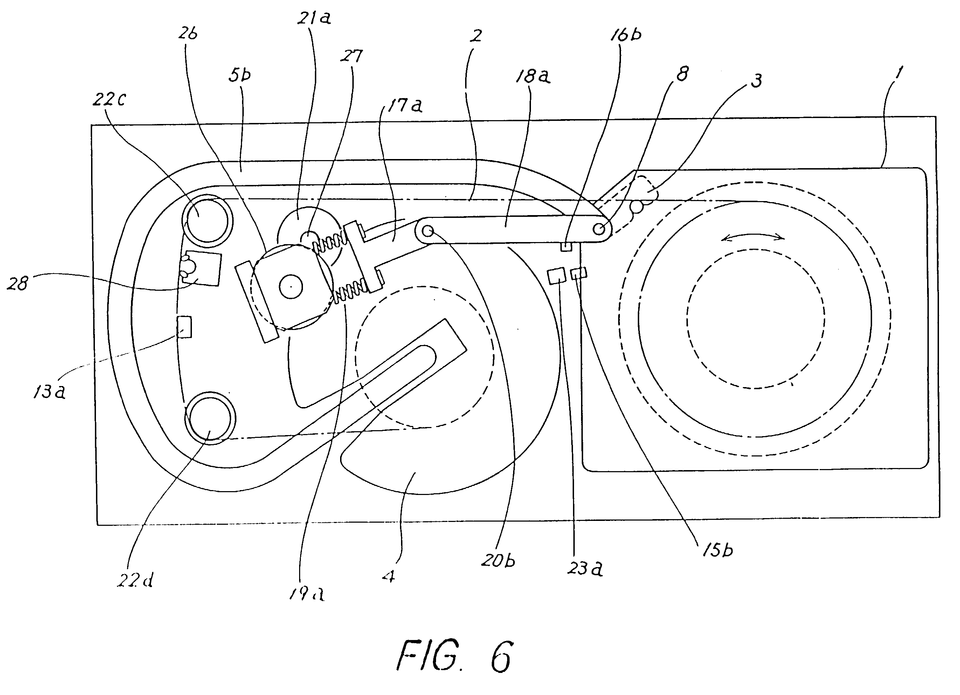

Fig. 6 illustrates a second embodiment of the present invention.

The threading mechanism of this embodiment includes first and second arms 17a and 18a, and an elastic member consisting of springs 19a provided on the first arm 17a.

A driving gear 26 is provided on the rotational axis of the first arm 17a, and a driven gear 27, which engages the driving gear 26, is provided on a threading motor 21a. The rotational speed of the motor is reduced via the driving gear 26 and driven gear 27, to generate a large force for swinging the threading arm.

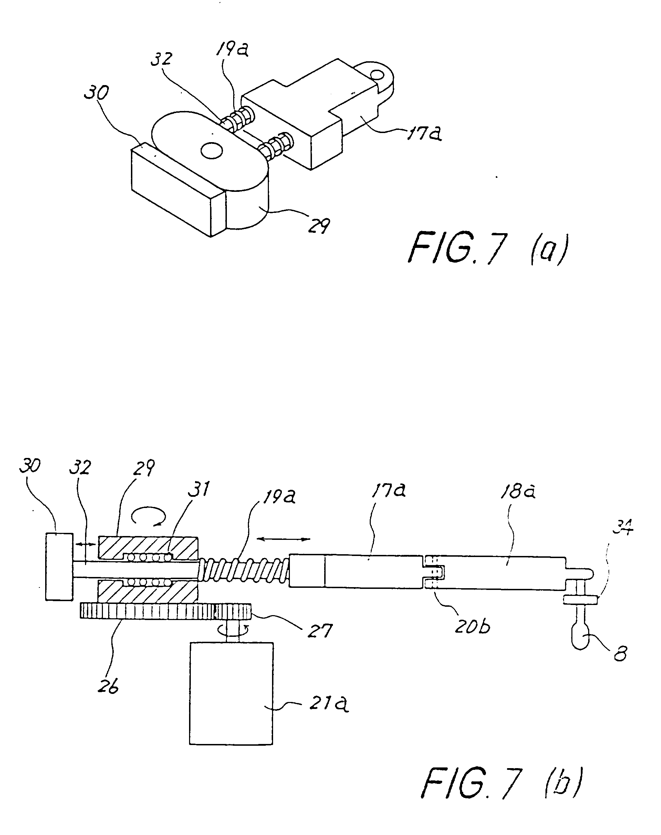

At an end of the second arm 18a are provided a pin 8 for pulling out a leader block 3 and a bearing 34 which is arranged coaxially to the pin 8 (see Fig. 7). The bearing 34 rotates with the pin 8 as a rotational axis to facilitate smooth movement of the pin 8 along a guide groove 5b, formed as a slot in a guide plate 33.

A stopper 23a (Fig. 6) for stopping the threading arm is provided at a position where the second arm 18a is required to stop. The second arm 18a has a flag 16b at its end which is used by a photosensor 15b to detect its presence. The sensor 15b is located slightly before the position where the second arm 18a strikes the stopper 23a.

Fig. 7 shows a detailed construction of the threading arm in this embodiment. Fig. 7(a) is a perspective view of the first arm, and Fig. 7(b) is a side elevational view of the threading arm and drive mechanism, a frame 29 being shown in section.

Two slide shafts 32 are inserted through springs 19a and frame 29, with the first arm 17a and an end plate 30 attached at opposite ends. The frame 29 includes a linear bearing 31 in contact with slide shafts 32, which allows the slide shafts 32 to slide smoothly through the frame 29.

Thus, the first arm 17a moves only in the axial direction of the slide shafts 32 while compressing the springs 19a and, therefore, cannot extend beyond the position where the end plate 30 contacts the frame 29.

Fig. 7(b) shows a state where the springs 19a are compressed and the end plate 30 is apart from the frame 29.

The other end of the first arm 17a is rotatably coupled to an end of the second arm 18a through the node 20b. Thus, the first arm 17a can make a rotational movement as well as a lengthwise movement along its axis. At the other end of second arm 18a, the pin 8 for pulling the leader block 3 is provided. A bearing 34 is provided coaxially to the pin 8 to allow the pin 8 to move smoothly along the guide groove 5b.

The above-mentioned driven gear 26, which reduces the rotational speed of the threading motor 21a in conjunction with the driving gear 27, is attached to the frame 29.

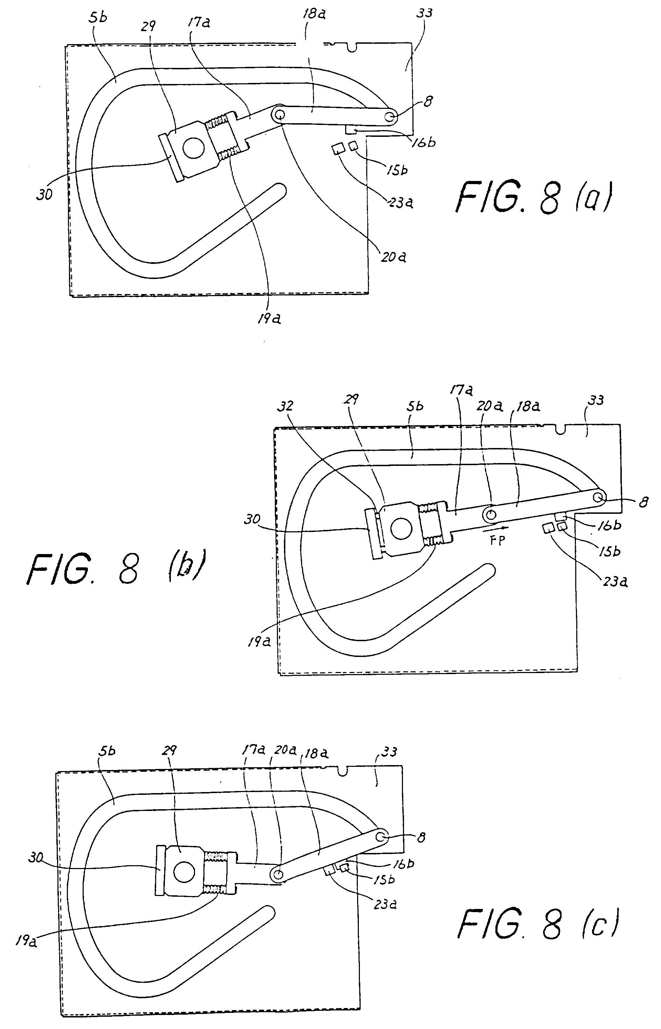

Fig. 8 shows the threading operation in this embodiment. That is, Figs. 8(a), 8(b) and 8(c) illustrate sequential stages in the operation to insert the leader block 3 into the cartridge 1 after it is led to the cartridge opening by the pin 8, along the guide groove 5b provided in guide plate 33.
(a) Leader-block Insertion Starting Stage
   The first arm 17a swings clockwise to make the pin 8 carry the leader block to the cartridge opening. The first arm 17a and second arm 18a are doglegged at this point, since the total length of the arms is set longer than the distance between the leader-block pick-up position and the rotational axis of the first arm 17a.
(b) Leader-block Inserting Stage
   The first arm 17a swings further clockwise, and the doglegged arms 17a and 18a straighten as the springs 19a are compressed. The slide shafts 32 are pressed toward the frame 29 and the end plate 30 moves away from the frame 29.
   The threading arm consisting of the first arm 17a and second arm 18a pushes the leader block 3 into the cartridge 1 with a force Fp equal to the force compressing the spring 19a.
   The compression force Fp of the spring 19a is set to a value, e.g. 2.5 kg force, sufficient to ensure that the leader block 3 is inserted into the cartridge.
(c) Arm Self-locking Stage
   As the first arm 17a swings clockwise still further, the arms 17a and 18a become reversely doglegged after passing the straightened state, and stop swinging when the stopper 23a is struck.
   At this stage, the force Fs which presses the arm 18a against the stopper 23a can be obtained without applying torque from the threading motor 21, so the threading mechanism can maintain a stable self-locking state.
   The threading motor is stopped when the sensor 15b detects the flag 16b. Thus, if the sensor 15b continues to detect the flag 16b with the threading mechanism in a stable self-locking state, it can be judged that the leader block 3 has been successfully inserted into the cartridge 1.

As described above, a threading arm consisting of a linkage of two arms, one of which includes an elastic member, can absorb a shock caused when inserting a leader-block, can insert the leader block with a small torque and can also maintain itself in a stable self-locked state at the leader-block pick-up position. A sensor can confirm leader-block insertion by detecting the threading arm in the self-locked state. Accordingly, leader-block insertion can be accomplished surely and economically by a tape threading mechanism of a simple configuration.

## Claims

1. A tape threading apparatus suitable for use in a tape unit including a machine reel (4) for performing a threading operation to pull out from a cartridge (1) a leader block (3) attached at an end of a -tape (2), thread and unthread the tape and insert the leader block back into the cartridge, said tape threading apparatus comprising:-
a threading arm for carrying the leader block (3), said threading arm having a first end connected to a rotational axis and a second end provided with engaging means (8) for the leader block, said threading arm including a linkage of a plurality of arms (17, 17a, 18, 18a) rotatably coupled to one another and including elastic means (19, 19a); and
guidance means (5b) for guiding the engaging means (8) so that the engaging means carries the leader block (3) between the cartridge (1) and the machine reel (4);
characterised in that:
said threading arm further comprises an additional member linked to one (17, 17a) of said arms via said elastic means, whereby said elastic means allows said threading arm to expand and contract lengthwise when inserting the leader block (3) into the cartridge (1) in such a way that a shock caused to the threading arm is absorbed and a required insertion force for the leader block is provided.

2. A tape threading apparatus according to claim 1, wherein the effective length of said threading arm is set longer than the distance between the rotational axis of said threading arm and the position where the leader block (3) is inserted into -the cartridge (1).

3. A tape threading apparatus according to claim 1 or 2, wherein said engaging means (8) is a pin on which the leader block (3) is carried.

4. A tape threading apparatus according to any preceding claim, further comprising a stopper (23, 23a) for stopping said threading arm from swinging when the leader (3) block is being inserted into the cartridge (1), the stopper being provided at a position where said threading arm becomes reversely doglegged after having become doglegged with the leader block (3) striking the cartridge (1) and then having become straight with the elastic member (19, 19a) compressed.

5. A tape threading apparatus according to claim 4, further comprising a sensor (15a, 15b) for detecting said threading arm to judge that the leader block (3) has been inserted into the cartridge (1), provided before the position where said threading arm comes into contact with said stopper (23, 23a).

6. A tape threading apparatus according to claim 5, wherein said sensor (15a, 15b), on detecting said threading arm, causes a motor (21, 21a) for swinging said threading arm to stop.

7. A tape threading apparatus according to any preceding claim, wherein said threading arm further comprises a shaft (32), inserted through a spring (19a) providing said elastic means and inserted through a frame (29) providing said additional member, said shaft having said one (17a) of said arms and an end plate (30) attached at opposite ends.

8. A tape threading apparatus according to claim 7, wherein said frame (29) includes a bearing in contact with said shaft (32) for allowing said shaft to slide through said frame.

9. A tape threading apparatus according to claim 3, wherein a bearing (34) is provided coaxially to the pin (8) to facilitate movement of the pin along said guidance means.

## Patentansprüche

1. Bandeinfädelvorrichtung, die für eine Verwendung in einer Bandeinheit geeignet ist, welche einen Maschinenspulenkörper (4) enthält, um eine Einfädeloperation durchzuführen, indem ein Führungsblock (3), der am Ende eines Bandes (2) angebracht ist, aus einer Kassette (1) herausgezogen wird, und um das Band einzufädeln und herauszuführen und den Führungsblock zurück in die Kassette einzuschieben, wobei die Bandeinfädelvorrichtung folgendes enthält:
einen Einfädelarm zum Tragen des Führungsblockes (3), wobei der Einfädelarm ein erstes Ende besitzt, welches mit einer Drehachse verbunden ist, und ein zweites Ende besitzt, welches mit einer Eingriffseinrichtung (8) für den Führungsblock ausgestattet ist, wobei der Einfädelarm ein Gestänge aus einer Vielzahl von Armen (17, 17a, 18, 18a) aufweist, die drehbar aneinandergekuppelt sind und eine elastische Vorrichtung (19, 19a) enthalten, und
eine Führungseinrichtung (5b) zum Führen der Eingriffseinrichtung (8), so daß die Eingriffseinrichtung den Führungsblock (3) zwischen der Kassette (1) und dem Maschinenspulenkörper (4) trägt,
dadurch gekennzeichnet, daß:
der Einfädelarm ferner ein zusätzliches Teil aufweist, welches an einen (17, 17a) der Arme über die elastische Vorrichtung angelenkt ist, wodurch die elastische Vorrichtung dem Einfädelarm die Möglichkeit gibt, sich in Längsrichtung auszudehnen und zusammenzuziehen, wenn der Führungsblock (3) in die Kassette (1) eingeführt wird, derart, daß ein von dem Einfädelarm verursachter Stoß absorbiert wird und eine erforderliche Einschiebekraft für den Führungsblock vorgesehen wird.

2. Bandeinfädelvorrichtung nach Anspruch 1, bei der die effektive Länge des Einfädelarmes länger eingestellt ist als der Abstand zwischen der Drehachse des Einfädelarmes und der Position, an der der Führungsblock (3) in die Kassette (1) eingeschoben wird.

3. Bandeinfädelvorrichtung nach Anspruch 1 oder 2, bei der die Eingriffseinrichtung (8) aus einem Stift besteht, auf dem der Führungsblock (3) getragen ist.

4. Bandeinfädelvorrichtung nach irgendeinem der vorhergehenden Ansprüche, ferner mit einem Anschlag (23, 23a) zum Anhalten des Einfädelarmes bei seiner Schwingbewegung, wenn der Führungsblock (3) in die Kassette (1) eingeschoben wird, wobei der Anschlag an einer Position vorgesehen ist, bei der der Einfädelarm umgekehrt abgewinkelt wird, nachdem er abgewinkelt worden ist, wobei der Führungsblock (3) an die Kassette (1) anschlägt und dann bei zusammengepresstem elastischen Teil (19, 19a) geradlinig geworden ist.

5. Bandeinfädelvorrichtung nach Anspruch 4, ferner mit einem Sensor (15a, 15b) zum Detektieren des Einfädelarmes, um zu beurteilen, ob der Führungsblock (3) in die Kassette (1) eingeschoben worden ist, der vor der Position angeordnet ist, bei der der Einfädelarm in Berührung mit dem Anschlag (23, 23a) gelangt.

6. Bandeinfädelvorrichtung nach Anspruch 5, bei der der Sensor (15a, 15b) beim Detektieren des Einfädelarmes einen Motor (21, 21a) zum Schwingen des Einfädelarmes veranlaßt, anzuhalten.

7. Bandeinfädelvorrichtung nach irgendeinem der vorhergehenden Ansprüche, bei der der Einfädelarm ferner eine Welle (32) umfaßt, die durch eine Feder (19a), welche die elastische Vorrichtung bildet, geschoben ist und durch einen Rahmen (29) geschoben ist, der das zusätzliche Teil vorsieht, wobei an den gegenüberliegenden Enden der Welle der eine (17a) der Arme und eine Endplatte (30) befestigt sind.

8. Bandeinfädelvorrichtung nach Anspruch 7, bei der der Rahmen (29) ein Lager enthält, welches in Berührung mit der Welle (32) steht, um der Welle die Möglichkeit zu geben, durch den Rahmen zu gleiten.

9. Bandeinfädelvorrichtung nach Anspruch 3, bei der ein Lager (34) koaxial zu dem Stift (8) vorgesehen ist, um die Bewegung des Stiftes entlang der Führungseinrichtung zu vereinfachen.

## Revendications

1. Appareil d'enfilement de bande qui peut être utilisé dans une unité à bande comprenant un rouleau (4) de machine, destiné à exécuter une opération d'enfilement comprenant l'extraction, à partir d'une cartouche (1), d'un bloc amorce (3) fixé à une extrémité d'une bande (2), l'enfilement et l'extraction de la bande, et l'insertion du bloc amorce à nouveau dans la cartouche, l'appareil d'enfilement de bande comprenant :
un bras d'enfilement destiné à transporter le bloc amorce (3), le bras d'enfilement ayant une première extrémité raccordée à un axe de rotation et une seconde extrémité ayant un dispositif (8) de coopération avec le bloc amorce, le bras d'enfilement comprenant une tringlerie comprenant plusieurs bras (17, 17a, 18, 18a) couplés l'un à l'autre afin qu'ils puissent tourner et comprenant un dispositif élastique (19, 19a), et
un dispositif (5b) de guidage du dispositif de coopération (8) de manière que le dispositif de coopération transporte le bloc amorce (3) entre la cartouche (1) et le rouleau (4) de la machine,
caractérisé en ce que
le bras d'enfilement comporte en outre un organe supplémentaire relié à un premier (17, 17a) des bras par l'intermédiaire du dispositif élastique, si bien que le dispositif élastique permet au bras d'enfilement de s'allonger et se contracter longitudinalement lors de l'insertion du bloc amorce (3) dans la cartouche (1) d'une manière telle qu'un choc provoqué sur le bras d'enfilement est absorbé et une force nécessaire d'insertion du bloc amorce est appliquée.

2. Appareil d'enfilement de bande selon la revendication 1, dans lequel la longueur efficace du bras d'enfilement est réglée à une valeur supérieure à la distance comprise entre l'axe de rotation du bras d'enfilement et la position à laquelle le bloc amorce (3) est introduit dans la cartouche (1).

3. Appareil d'enfilement de bande selon la revendication 1 ou 2, dans lequel le dispositif (8) de coopération est une broche sur laquelle est porté le bloc amorce (3).

4. Appareil d'enfilement de bande selon l'une quelconque des revendications précédentes, comprenant en outre un organe d'arrêt (23, 23a) destiné à arrêter le pivotement du bras d'enfilement lorsque le bloc amorce (3) est inséré dans la cartouche (1), l'organe d'arrêt ayant une position à laquelle le bras d'enfilement est décalé dans l'autre sens, après que le bras a pris une position décalée telle que le bloc amorce (3) a frappé la cartouche (1), puis a pris une position rectiligne avec compression de l'organe élastique (19, 19a).

5. Appareil d'enfilement de bande selon la revendication 4, comprenant en outre un capteur (15a, 15b) destiné à détecter le bras d'enfilement pour déterminer le fait que le bloc amorce (3) a été inséré dans la cartouche (1), le capteur ayant une position telle qu'il fonctionne avant que le bras d'enfilement ne soit venu au contact de l'organe d'arrêt (23, 23a).

6. Appareil d'enfilement de bande selon la revendication 5, dans lequel le capteur (15a, 15b), lors de la détection du bras d'enfilement, provoque l'arrêt d'un moteur (21, 21a) du basculement du bras d'enfilement.

7. Appareil d'enfilement de bande selon l'une quelconque des revendications précédentes, dans lequel le bras d'enfilement comporte en outre un arbre (32), introduit par un ressort (19a) formant le dispositif élastique et introduit dans un cadre (29) formant un organe supplémentaire, l'un (17a) des bras et une plaque d'extrémité (30) étant fixés aux extrémités opposées de l'arbre.

8. Appareil d'enfilement de bande selon la revendication 7, dans lequel le cadre (29) comprend un organe d'appui placé au contact de l'arbre (32) et destiné à permettre le coulissement de l'arbre dans le cadre.

9. Appareil d'enfilement de bande selon la revendication 3, dans lequel un organe d'appui (34) est placé coaxialement à la broche (8) afin qu'il facilite le déplacement de la broche le long du dispositif de guidage.
